# EUROPÄISCHE PATENTSCHRIFT

(11) **EP 3 601 412 B1**
(45) Veröffentlichungstag und Bekanntmachung des Hinweises auf die Patenterteilung: **28.09.2022**
(21) Anmeldenummer: 18713241.0
(22) Anmeldetag: 27.03.2018
(51) Int. Cl.: C08G 73/02

(54) **HOMOGENE POLY(ALKYLEN)GUANIDINE UND VERFAHREN ZU DEREN HERSTELLUNG**
HOMOGENEOUS POLY(ALKYLENE) GUANIDINES AND METHOD FOR THEIR PREPARATION
POLY(ALKYLÈNE)GUANIDINE HOMOGÈNE ET SON PROCÉDÉ DE FABRICATION

(30) Priorität: 28.03.2017 EP 17000505
(43) Veröffentlichungstag der Anmeldung: 05.02.2020
(73) Patentinhaber: Flechsig, Thomas, 6313 Edlibach (CH)
(72) Erfinder: FLECHSIG, Frank, 5610 Wohlen (CH); FLECHSIG, Thomas, 6313 Edlibach (CH)
(74) Vertreter: v. Bezold & Partner Patentanwälte - PartG mbB
(86) Internationale Anmeldenummer: PCT/EP2018/057809
(87) Internationale Veröffentlichungsnummer: WO 2018/178093

(56) Entgegenhaltungen:
- EP-A1- 1 551 903
- WO-A1-99/54291
- US-A- 2 325 586

## Beschreibung

### Hintergrund der Erfindung

Verschiedene Verfahren zur Herstellung von Poly(alkylen)guanidinen sind grundsätzlich bekannt und beinhalten typischerweise die direkte Umsetzung eines Alkylendiamins mit Guanidinium-Hydrochlorid zum Polymer bei relativ hohen Temperaturen oberhalb der minimalen Polymerisationstemperatur für das gewünschte Poly(alkylenguanidin), z.B. etwa bei der Schmelztemperatur des Guanidinium-Hydrochlorids von 180°C. Solche Verfahren werden beispielsweise in DE 102009060249 A1, WO 1999054291 A1, DE 102009060249 B4 US 2325586 A und EP 1551903 A1 beschrieben.

Nachteilig bei diesen herkömmlichen Verfahren ist beispielsweise, dass aufgrund der hohen Reaktionstemperatur und der hohen Viskosität von Guanidinium-Hydrochlorid bzw. der Reaktionsmischung bei dieser Temperatur einerseits eine sehr starke Ammoniakbildung während der Kondensationsreaktionen erfolgt und andererseits die Ausgasung nicht ausreichend schnell und kontrolliert erfolgen kann.

Außerdem liegen bei diesen hohen Temperaturen praktisch gleichzeitig Mischungen von Alkylen-Monomeren und verschiedenen Polymermolekülen mit kleinem Polymerisationsgrad als Edukte vor, was eine große Auswahl an Reaktionsmöglichkeiten und ein breites Spektrum an potentiellen finalen Reaktionsprodukten ergibt.

Diese und andere negative Effekte führen dazu, dass bei den herkömmlichen Verfahren nicht nur lineare Poly(alkylen)guanidine mit gewünschter Kettenlänge sondern auch ein hoher Anteil an kürzeren und längeren Ketten und insbesondere auch ein hoher Anteil (typischerweise mindestens 20 %) an verzweigten Poly(alkylenguanidin)-Isomeren gebildet wird.

Heterogene Produkte, insbesondere mit einem hohem Isomerenanteil, sind jedoch für viele Anwendungen unerwünscht, da wesentliche Eigenschaften von Poly(alkylen)guanidinen wie biologische Abbaubarkeit, Aktivität etc. von strukturellen Parametern wie Molekülgröße, Isomerenanteil, Verzweigungsgrad etc., abhängen und daher mit einem solchen heterogenen Produkt nicht zuverlässig vorherbestimmbar sind.

Vor diesem Hintergrund besteht die Hauptaufgabe der vorliegenden Erfindung in der Bereitstellung eines neuen Verfahrens zur Herstellung definierter Poly(alkylen)guanidine, mit dem die geschilderten Nachteile des Standes der Technik weitgehend oder vollständig vermieden werden, und in der Bereitstellung der entsprechenden homogenen, insbesondere isomerenarmen Produkte.

Diese Aufgabe wird erfindungsgemäß mit der Bereitstellung des Verfahrens nach Anspruch 1 und der damit erhältlichen Poly(alkylen)guanidin-Produkte nach Anspruch 11 gelöst. Speziellere Aspekte und bevorzugte Ausführungsformen der Erfindung sind Gegenstand der weiteren Ansprüche.

### Beschreibung der Erfindung

Das erfindungsgemäße Verfahren zur Herstellung von Poly(alkylen)guanidinen nach Anspruch 1 umfasst mindestens die folgenden Schritte:
a) Bereitstellen eines Alkylendiamins der Formel NH₂-(CH₂)ₘ-NH₂ mit m = eine ganze Zahl von 4-12 in einem Reaktionsgefäß und Erwärmen des Alkylendiamins auf eine Temperatur gleich oder oberhalb der Schmelztemperatur des jeweiligen Alkylendiamins in einem Bereich von 25 °C bis 115 °C, vorzugsweise von 55 °C bis 110 °C, wodurch eine Schmelze des Alkylendiamins entsteht;
b) portionsweises Zugeben eines Guanidinium-Salzes (in fester, insbesondere partikulärer Form) und Umsetzen mit dem Alkylendiamin, bis die Bildung von Alkylen(guanidin)-Monomeren abgeschlossen ist, feststellbar durch Beendigung der NH3-Freisetzung;
c) Umsetzen der in Schritt b) gebildeten Monomere bei mindestens der minimalen Temperatur, bei der die Polymerisation zum gewünschten Poly(alkylen)guanidin beginnt,

wobei die minimale Polymerisationstemperatur mindestens 120 °C beträgt, bis die Bildung des Poly(alkylen)guanidins abgeschlossen ist;
wobei das Molverhältnis von Alkylendiamin zu Guanidinium-Salz im Bereich von 1,2:1 bis 1:1 liegt und die Schritte a) und b) zur Bildung von Alkylen(guanidin)-Monomeren bei einer Temperatur unterhalb der minimalen Polymerisationstemperatur erfolgen und alle Verfahrensschritte unter Rühren durchgeführt werden.

Das verwendete Alkylendiamin der Formel NH₂-(CH₂)ₘ-NH₂, mit m = eine ganze Zahl von 4-12, insbesondere 6-10, umfasst insbesondere die Vertreter mit einer geraden Anzahl von Kohlenstoffen wie Tetramethylendiamin, Hexamethylendiamin, Oktamethylendiamin, Dekamethylendiamin und Dodekamethylendiamin, ist jedoch nicht darauf beschränkt.

Gewünschtenfalls könnte auch eine Mischung von Diaminen, z.B. zwei oder mehr verschiedenen Diaminen, mit einer Formel wie oben definiert eingesetzt werden.

Das verwendete Guanidinium-Salz kann prinzipiell jedes Salz einer organischen oder, bevorzugter, anorganischen Säure sein. Vorzugsweise handelt es sich um ein Guanidinium-Phosphat oder Guanidium-Halogenid, besonders bevorzugt um Guanidinium-Chlorid, welches auch (insbesondere im Handel) als Guanidinium-Hydrochlorid bezeichnet wird.

Die Monomerbildung in Schritt b) kann grundsätzlich bei einer Temperatur im Bereich von 20 °C bis 115°C, spezieller bei einer Temperatur von 25°C bis 110 °C, durchgeführt werden. Typischerweise liegt die Temperatur im Bereich von 41 °C bis 110°C, bevorzugter im Bereich von 65 °C bis 95 °C. Die optimale Reaktionstemperatur hängt u.a. vom jeweiligen Alkylendiamin ab.

Für Tetramethylendiamin wird Schritt b) vorzugsweise bei einer Temperatur im Bereich von 20 °C bis 70 °C, durchgeführt; für Hexamethylendiamin vorzugsweise bei einer Temperatur im Bereich von 60 °C bis 80 °C; für Oktamethylendiamin vorzugsweise bei einer Temperatur im Bereich von 70 °C bis 90 °C; und für Dekamethylendiamin vorzugsweise bei einer Temperatur im Bereich von 75 °C bis 90 °C.

Die Monomerbildung in Schritt b) wird typischerweise für einen Zeitraum von 15 min bis 20 h oder 25 h, vorzugsweise von 30 min. bis 6 h, durchgeführt bis die Bildung von Alkylen(guanidin)-Monomeren abgeschlossen ist.

Der Begriff "Alkylen(guanidin)-Monomere", wie hier verwendet, umfasst keine oligomeren oder prepolymeren Einheiten. Da Schritt b) bei einer Temperatur unterhalb der minimalen Polymerisationstemperatur stattfindet, wird die Bildung von größeren Einheiten, auch oligomeren und (pre)polymeren Einheiten, vor Schritt c) ganz oder weitgehend verhindert.

Die minimale Polymerisationstemperatur ist abhängig von den jeweils eingesetzten Alkylendiaminen und dem gewünschten Polyalkylen)guanidin-Endprodukt und beträgt mindestens 120°C.

Der Abschluss der Monomerbildung in Schritt b) ist durch das Ende der NH₃-Bildung und NH₃-Freisetzung gekennzeichnet und kann optisch durch Beendigung der Schaumbildung aufgrund von NH₃-Freisetzung festgestellt werden. Gegebenenfalls wird für einen vorbestimmten Zeitraum ein Unterdruck im Reaktionsgefäß erzeugt, um die Schaumbildung zu fördern und damit die NH₃-Freisetzung zu beschleunigen.

Darüber hinaus kann der Abschluß der Monomerbildung natürlich auch durch Analyse der Reaktionsmischung, beispielsweise (mehrfache) Probenentnahme, Bestimmung des Anteils des gewünschten Monomerprodukts und/oder Feststellung des Zeitpunkts, an dem sich dieser Anteil nicht mehr ändert, ermittelt werden.

In einer Ausführungsform des erfindungsgemäßen Verfahrens wird für einen Zeitraum im Bereich von 10 bis 240 min, typischerweise von 15 bis 90 min, ein Druck im Bereich von 2 mbar bis 4000 mbar, vorzugsweise von 10 mbar bis 1000 mbar, in Schritt b) im Reaktionsgefäß vorgelegt.

Gegebenenfalls kann in Schritt b) nicht umgesetztes Alkylendiamin vor Schritt c) entfernt, insbesondere abdestilliert, werden. Dies geschieht vorzugsweise ebenfalls bei Unterdruck. Geeignete Bedingungen können unschwer durch Routineversuche ermittelt werden. Beispielsweise kann das Alkylendiamin bei einem Druck des Reaktors von 10 mbar und einer Temperatur bis 60 °C abdestilliert werden.

Die Polymerisation oder genauer die Polykondensation in Schritt c) wird typischerweise für einen Zeitraum von 30 min bis 25 h, vorzugsweise von 30 min bis 6 h oder 30 min bis 10 h, durchgeführt.

Der Abschluss der Bildung des gewünschten Poly(alkylen)guanidins kann beispielsweise durch Analyse der Reaktionsmischung, z.B. mittels Probenentnahme und Bestimmung des Anteils des gewünschten Polymerprodukts (z.B. durch LC-MS und/oder Stickstoffbestimmung wie im Folgenden noch näher ausgeführt) und/oder Feststellung des Zeitpunkts, an dem sich das Polymerprodukt hinsichtlich Molmasse (in Dalton) und/oder Kettenlänge (Anzahl der Monomereinheiten) in einem gewünschten Bereich befindet, ermittelt werden.

Die Verfahrensführung kann beispielsweise durch Variation der Reaktionszeiten und Reaktionstemperaturen innerhalb der in der vorliegenden Beschreibung angegebenen Bereiche unschwer optimiert und standardisiert werden, sodass durch Vorgabe und Einstellung dieser Reaktionsparameter das gewünschte Polymerprodukt reproduzierbar unter optimalen Bedingungen erhalten werden kann.

Gegebenenfalls kann das erfindungsgemäße Verfahren nach Schritt c) noch weitere Schritte zur Aufarbeitung des Produkts, beispielsweise zur Abtrennung von nicht umgesetzten Ausgangsmaterialien oder Nebenprodukten, umfassen.

Eine speziellere Ausführungsform des erfindungsgemäßen Verfahrens umfasst mindestens die folgenden Schritte:
a) Bereitstellen eines Alkylendiamins der Formel NH₂-(CH₂)ₘ-NH₂ mit m = 4-12, insbesondere 6-10, in einem Reaktionsgefäß, vorzugsweise einem Druckreaktor, und Erwärmen des Alkylendiamins auf eine Temperatur gleich oder oberhalb der Schmelztemperatur des jeweiligen Alkylendiamins, typischerweise auf eine Temperatur in einem Bereich 25 °C bis 115 °C, wodurch eine Schmelze des Alkylendiamins entsteht;
b) portionsweises Zugeben eines Guanidinium-Salzes, z.B. von Guanidinium-Hydrochlorid, in fester Form und Umsetzen mit dem Alkylendiamin unter Rühren bei einer Temperatur im Bereich von 41 °C bis 110°C, vorzugsweise von 65 °C bis 95 °C, für einen Zeitraum von 15 min bis 25 h, vorzugsweise von 30 min bis 6 h, bis die Bildung von Alkylen(guanidin)-Monomeren abgeschlossen ist;
c1) Erwärmen der in Schritt b) gebildeten Monomere unter Rühren auf die minimale Temperatur, bei der die Polymerisation zum gewünschten Poly(alkylen)guanidin beginnt;
c2) Halten der Reaktionsmischung bei dieser Temperatur für einen vorbestimmten Zeitraum, typischerweise im Bereich von 5 min bis 6 h, vorzugsweise im Bereich von 10 bis 90 min;
c3) Langsames Erhöhen der Reaktionstemperatur, typischerweise in Schritten von etwa 5 °C, und nach jedem Schritt Halten der Reaktionsmischung bei der jeweiligen erhöhten Temperatur für einen vorbestimmten Zeitraum, typischerweise im Bereich von 5 min bis 6 h, vorzugsweise im Bereich von 10 bis 90 min;
c4) Halten der Reaktionsmischung bei der vorbestimmten Maximaltemperatur für einen vorbestimmten Zeitraum, typischerweise im Bereich von 110 bis 180 min, vorzugsweise 120 bis 160 min;
c5) Reduzieren der Temperatur der Reaktionsmischung auf einen vorbestimmten Wert unterhalb der Maximaltemperatur aber oberhalb der Minimaltemperatur zur Polymerisation und Halten der Reaktionsmischung bei dieser Temperatur für einen vorbestimmten Zeitraum;
c6) Abkühlen der Reaktionsmischung auf eine Temperatur unterhalb der minimalen Polymerisationstemperatur zur Beendigung der Polymerisation, wodurch das gewünschte homogene Poly(alkyen)guanidin direkt erhalten wird;
wobei die Schritte a) und b) bei einer Temperatur unterhalb der minimalen Polymerisationstemperatur erfolgen und alle Verfahrensschritte a) bis c) unter Rühren durchgeführt werden.

Im erfindungsgemäßen Verfahren liegt das Molverhältnis von Alkylendiamin zu Guanidinium-Salz im Bereich von 1,2:1, konkreter im Bereich von 1,2:1 bis 1:1, vorzugsweise 1,1:1 bis 1:1, bevorzugter 1,05:1 oder 1,02:1 bis 1:1, und beträgt besonders bevorzugt etwa 1:1.

Ein weiterer Aspekt der vorliegenden Erfindung betrifft die mit dem erfindungsgemäßen Verfahren erhältlichen homogenen Produkte.

Diese Poly(alkylen)ganidine weisen einen Gehalt von mindestens 85 Gew.-%, typischerweise mindestens 90 %, insbesondere mindestens 95 % oder 97 %, eines gewünschten linearen Poly(alkylen)guanidins mit 3-14, vorzugsweise 4-10 oder 6-8, Alkylen-Monomereinheiten im Molekül als Hauptprodukt und einen Gehalt an Nebenprodukten, insbesondere verzweigten Isomeren dieses Poly(alkylen)guanidins, von höchstens 15 % (in dieser Anmeldung in Hinblick auf den Isomerenanteil auch als "isomerenreduziertes" Produkt bezeichnet), 10 % ("isomerenarmes" Produkt), 5 % oder 3 % ("isomerenreines" Produkt) auf.

Im Gegensatz dazu weisen Poly(alkylen) guanidine, die mit den üblichen Verfahrens des Standes der Technik erhalten werden, in der Regel eine wesentlich höheren Gehalt an Isomeren auf (typischerweise über 20 %, in einzelnen Fällen sogar bis 70% Isomere).

In einer spezielleren Ausführungsform des erfindungsgemäßen Verfahrens werden Poly(alkylen)guanidine hergestellt, welches ein Molekulargewichts-Mittel im Bereich von 500 bis 15.000, insbesondere von 500 bis 5.000. Dalton, aufweisen, wobei höchstens 15 %, vorzugsweise höchstens 10 %, und besonders bevorzugt höchstens 3 % der Polymermoleküle ein Molekulargewicht außerhalb des jeweiligen Molekulargewichts-Mittels aufweisen.

### BEISPIEL 1

### Herstellung und Charakterisierung eines Poly(hexamethylen)guanidins

Die Edukte Hexamethylendiamin (HMDA) und Guanidinium-Hydrochlorid (GHC) wurden in einem Molverhältnis von 1:1 abgewogen.

HMDA wurde in einen Reaktor gefüllt und pulverförmiges oder kristallines GHC in die Vorlage eingebracht. Der Reaktor wurde auf eine Innentemperatur IT von 60°C erhitzt und der Rührer bei vollständiger Schmelze des HMDA eingeschaltet. Bei Erreichen dieser IT-Temperatur wurde die Temperaturregelung auf 65°C eingestellt, mit laufendem Rührer.

Bei konstanter Temperatur wurde GHC aus der Vorlage zudosiert. Die Ammoniakbildung setzte sofort ein. Schäumung und Temperatur wurden kontrolliert und gegebenenfalls die Zudosierung variiert und/oder Kühlung eingesetzt. Die Reaktortemperatur sollte den Bereich von 60 °C bis 80 °C nicht verlassen und vorzugsweise im Bereich von 60-70 °C liegen.

Nach Beendigung der GHC-Zudosierung reduzierte sich die Schaumbildung deutlich und die Temperatur pegelte sich auf 65 °C ein. Nach Erhöhung der Rührerdrehzahl und Anlegung eines Unterdrucks von 10 mbar bis 950 mbar, vorzugsweise 200 mbar bis 600 mbar, setzte geringe Schäumung wieder ein. Sobald der Druck konstant war und keine Schäumung oder Bläschenbildung sichtbar war, wurde die Temperatur auf IT 80 °C erhöht und die Rührerdrehzahl auf Maximum erhöht. Nach 20 min wurde der Unterdruck aufgehoben und die Rührerdrehzahl wieder verringert. Die Monomerbildung war jetzt abgeschlossen.

Es wurde eine Probe des Reaktorinhalts entnommen und der HMDA-Gehalt überprüft. Bei einem zu hohen HDMA-Restgehalt kann der Druck des Reaktors auf beispielsweise 10 mbar abgesenkt und das HMDA bei einer Temperatur bis 60 °C abdestilliert werden.

Zur Polymerisation wurde auf eine Temperatur IT von 120°C mit Rührer in Betrieb aufgeheizt und 1 h lang bei konstanter Temperatur gehalten. Dann erfolgte eine langsame Erhöhung der Temperatur in Schritten von 5 °C bis 140 °C, wobei die Temperatur 30 min lang bei jedem Schritt gehalten wurde. Bei 140 °C wurde die Reaktion 2 h lang unter kräftigem Rühren gehalten. Es folgte eine weitere Temperaturerhöhung auf 150°C in Schritten von 5 °C. Die Temperatur wurde nach dem ersten Schritt für 1 h gehalten, dann weitere 2 h bei 150° C gehalten und die Rührerdrehzahl erhöht. Dann wurde die Temperatur auf 120 °C verringert und dort für 1 weitere Stunde gehalten.

Zur Beendigung der Polymerisation wurde auf eine IT von unter 95°C bei maximalem Rühren abgekühlt.

Das Produkt wurde mittels LC-MS und Stickstoffbestimmung charakterisiert.

Der theoretische Stickstoffanteil ("N soll") für das "ideale" (lineare) Polymer mit einem vorgegebenen Molekulargewichtsmittel und Polymerisationsgrad sowie für entsprechende verzweigte Isomere lässt sich anhand der jeweiligen Strukturformeln berechnen und mit dem tatsächlichen Stickstoffanteil des erhaltenen Polymers (N ist) vergleichen. Der theoretische Stickstoffanteil der Isomeren ist immer höher und daher stellt die Höhe des Stickstoffüberschusses (bezogen auf N soll) ein Maß für den jeweiligen Isomerenanteil dar.

Die folgenden Tabellen zeigen charakteristische Produktparameter unterschiedlicher Proben im Vergleich.

Die als Labor Test 1 und Labor Test 2 bezeichneten Proben wurden mit dem erfindungsgemäßen Verfahren erhalten, die anderen Proben mit verschiedenen herkömmlichen Verfahren. Die wichtigsten Verfahrensparameter sind in Tabelle 1 mit angegeben.

**Tabelle 1**

| Bestimmung des mittleren Polymerisationsgrads mit LC-MS, MALDI-TOF, GC | | | | | | |
|---|---|---|---|---|---|---|
| | **Verfahren** | **Temperatur** | **Temperatur** | **Temperatur** | **Zeit** | **Polymer** |
| **Probe** | **Edukte Reaktion Aggregatzustand** | **Schmelze** | **Monomer** | **Max Temp** | **Gesamt Stunden** | **Min/Max/Mittel** |
| | | | | | | |
| **Labor Test 1** | HMDA Flüssig / GHC fest | 55 | 70 | 150 | 6 | n4/n8/n6 |
| **Labor Test 2** | HMDA Flüssig / GHC fest | 55 | 65 | 145 | 8 | n3/n8/n5 |
| | | | | | | |
| **China Pulver 1000** | HMDA Flüssig / GHC flüssig | 180 | 180 | 210 | 7 | n4/n11/n6 |
| **China Kristall 1000** | HMDA Flüssig / GHC flüssig | 180 | 140 | 190 | 6 | n4/n10/n6 |
| | | | | | | |
| **Labor Test 36/182** | HMDA Flüssig / GHC flüssig | 180 | 130 | 190 | 5 | n27/n199/n72 |
| **Labor Test 36/184** | HMDA Flüssig / GHC flüssig | 180 | 130 | 230 | 5 | n32/n240/n82 |
| **Labor Test 36/192** | HMDA Flüssig / GHC flüssig | 180 | 130 | 190 | 3 | n16/n160/n54 |

**Tabelle 2**

| Vergleich des theoretischen Stickstoffanteils (N soll) für das "ideale" (lineare) Polymer mit dem angegebenen Molekulargewichtsmittel und Polymerisationsgrad mit dem tatsächlichen Stickstoffanteil des erhaltenen Polymers (N ist), wie gemessen mittels DumaTherm (DUMATHERM^{_{®}} Stickstoff-Schnellbestimmung nach DUMAS von Hersteller Gerhardt) mit 1 g Polymer | | | | |
|---|---|---|---|---|
| **Probe** | **Edukte Reaktion Aggregatzustand** | **N soll** | **N ist** | **Polymer Mw D** |
| | | | | |
| **Labor Test 1** | HMDA Flüssig / GHC fest | 245,72 | 281,3 | 1.083,30 |
| **Labor Test 2** | HMDA Flüssig / GHC fest | 247,53 | 265,8 | 905,60 |
| | | | | |
| **China Pulver 1000** | HMDA Flüssig / GHC flüssig | 245,72 | 378,2 | 1.083,30 |
| **China Kristall 1000** | HMDA Flüssig / GHC flüssig | 245,72 | 344,6 | 1.083,30 |
| | | | | |
| **Labor Test 36/182** | HMDA Flüssig / GHC flüssig | 237,30 | 316,2 | 12.811,44 |
| **Labor Test 36/184** | HMDA Flüssig / GHC flüssig | 237,21 | 321,8 | 14.588,44 |
| **Labor Test 36/192** | HMDA Flüssig / GHC flüssig | 237,56 | 324,6 | 9.612,84 |

**Tabelle 3**

| Ableitung des jeweiligen Anteils an Isomeren und (linearem) Polymer anhand des gemessenen Stickstoffüberschusses in Abhängigkeit vom Polymerisationsgrad | | | | |
|---|---|---|---|---|
| **Probe** | **Edukte Reaktion Aggregatzustand** | **Polymer %** | **Isomer %** | **Polymer Mw D** |
| | | | | |
| **Labor Test 1** | HMDA Flüssig / GHC fest | 85,52% | 14,48% | 1.083,30 |
| **Labor Test 2** | HMDA Flüssig / GHC fest | 92,62% | 7,38% | 905,60 |
| | | | | |
| **China Pulver 1000** | HMDA Flüssig / GHC flüssig | 46,09% | 53,91% | 1.083,30 |
| **China Kristall 1000** | HMDA Flüssig / GHC flüssig | 59,76% | 40,24% | 1.083,30 |
| | | | | |
| **Labor Test 36/182** | HMDA Flüssig / GHC flüssig | 66,75% | 33,25% | 12.811,44 |
| **Labor Test 36/184** | HMDA Flüssig / GHC flüssig | 64,34% | 35,66% | 14.588,44 |
| **Labor Test 36/192** | HMDA Flüssig / GHC flüssig | 63,36% | 36,64% | 9.612,84 |

Es ist ersichtlich, dass die mit dem erfindungsgemäßen Verfahren erhaltenen Proben einen deutlich geringeren Isomerenanteil als die herkömmlichen Proben aufweisen.

## Patentansprüche

1. Verfahren zur Herstellung von Poly(alkylen)guanidinen, umfassend mindestens die folgenden Schritte:
a) Bereitstellen eines Alkylendiamins der Formel NH₂-(CH₂)ₘ-NH₂, mit m = 4-12, in einem Reaktionsgefäß und Erwärmen des Alkylendiamins auf eine Temperatur gleich oder oberhalb der Schmelztemperatur des jeweiligen Alkylendiamins in einem Bereich von 25 °C bis 115 °C, wodurch eine Schmelze des Alkylendiamins entsteht;
b) portionsweises Zugeben eines Guanidinium-Salzes und Umsetzen mit dem Alkylendiamin, bis die Bildung von Alkylen(guanidin)-Monomeren abgeschlossen ist, feststellbar durch Beendigung der NH₃-Freisetzung;
c) Umsetzen der in Schritt b) gebildeten Monomere bei mindestens der minimalen Temperatur, bei der die Polymerisation zum gewünschten Poly(alkylen)guanidin beginnt, wobei die minimale Polymerisationstemperatur mindestens 120 °C beträgt, bis die Bildung des Poly(alkylen)guanidins abgeschlossen ist;
wobei das Molverhältnis von Alkylendiamin zu Guanidinium-Salz im Bereich von 1,2:1 bis 1:1 liegt und die Schritte a) und b) zur Bildung von Alkylen(guanidin)-Monomeren bei einer Temperatur unterhalb der minimalen Polymerisationstemperatur erfolgen und alle Verfahrensschritte unter Rühren durchgeführt werden.

2. Verfahren nach Anspruch 1, wobei Schritt b) bei einer Temperatur im Bereich von 25 °C bis 110 °C für einen Zeitraum von 15 min bis 20 h, durchgeführt wird und/oder wobei Schritt c) für einen Zeitraum von 30 min bis 25 h durchgeführt wird.

3. Verfahren nach Anspruch 1 oder 2, umfassend mindestens die folgenden Schritte:
a) Bereitstellen eines Alkylendiamins der Formel NH₂-(CH₂)ₘ-NH₂, mit m = 4-12, in einem Reaktionsgefäß, vorzugsweise einem Druckreaktor, und Erwärmen des Alkylendiamins auf eine Temperatur gleich oder oberhalb der Schmelztemperatur des jeweiligen Alkylendiamins in einem Bereich von 25 °C bis 115 °C, wodurch eine Schmelze des Alkylendiamins entsteht;
b) portionsweises Zugeben eines Guanidinium-Salzes und Umsetzen mit dem Alkylendiamin unter Rühren bei einer Temperatur im Bereich von 41 °C bis 110 °C für einen Zeitraum von 15 min bis 25 h bis die Bildung von Alkylen(guanidin)-Monomeren abgeschlossen ist;
c1) Erwärmen der in Schritt b) gebildeten Monomere unter Rühren auf die minimale Temperatur, bei der die Polymerisation zum gewünschten Poly(alkylen)guanidin beginnt;
c2) Halten der Reaktionsmischung bei dieser Temperatur für einen vorbestimmten Zeitraum;
c3) Langsames Erhöhen der Reaktionstemperatur und nach jedem Erhöhungsschritt Halten der Reaktionsmischung bei der jeweiligen erhöhten Temperatur für einen vorbestimmten Zeitraum;
c4) Halten der Reaktionsmischung bei der vorbestimmten Maximaltemperatur für einen vorbestimmten Zeitraum;
c5) Reduzieren der Temperatur der Reaktionsmischung auf einen vorbestimmten Wert unterhalb der Maximaltemperatur aber oberhalb der Minimaltemperatur zur Polymerisation und Halten der Reaktionsmischung bei dieser Temperatur für einen vorbestimmten Zeitraum;
c6) Abkühlen der Reaktionsmischung auf eine Temperatur unterhalb der minimalen Polymerisationstemperatur zur Beendigung der Polymerisation, wodurch das gewünschte homogene Poly(alkyen)guanidin direkt erhalten wird;
wobei die Schritte a) und b) bei einer Temperatur unterhalb der minimalen Polymerisationstemperatur erfolgen und alle Verfahrensschritte a) bis c) unter Rühren durchgeführt werden.

4. Verfahren nach einem der Ansprüche 1 bis 3, wobei das Alkylendiamin Tetramethylendiamin ist, die Monomerbildung in Schritt b) bei einer Temperatur im Bereich von 25 °C bis 110 °C durchgeführt wird und die minimale Polymerisationstemperatur 120 °C beträgt.

5. Verfahren nach einem der Ansprüche 1 bis 3, wobei das Alkylendiamin Hexamethylendiamin, Oktamethylendiamin oder Dekamethylendiamin ist, die Monomerbildung in Schritt b) bei einer Temperatur im Bereich von 55 °C bis 110 °C durchgeführt wird, wenn das Alkylendiamin Hexamethylendiamin oder Oktamethylendiamin ist, oder bei einer Temperatur im Bereich von 55 °C bis 100 °C durchgeführt wird, wenn das Alkylendiamin Dekamethylendiamin ist, und die minimale Polymerisationstemperatur 120 °C beträgt.

6. Verfahren nach Anspruch 5, wobei die Monomerbildung in Schritt b) bei einer Temperatur im Bereich von 60 °C bis 80 °C durchgeführt wird, wenn das Alkylendiamin Hexamethylendiamin ist, die Monomerbildung in Schritt b) bei einer Temperatur im Bereich von 70 °C bis 90 °C durchgeführt wird, wenn das Alkylendiamin Oktamethylendiamin ist, und die Monomerbildung in Schritt b) bei einer Temperatur im Bereich von 75 °C bis 90 °C durchgeführt wird, wenn das Alkylendiamin Dekamethylendiamin ist.

7. Verfahren nach einem der Ansprüche 1-6, wobei der Abschluss der Monomerbildung in Schritt b) durch Beendigung der Schaumbildung aufgrund von NH₃-Freisetzung festgestellt und gegebenenfalls für einen vorbestimmten Zeitraum ein Unterdruck im Reaktionsgefäß erzeugt wird, um die Schaumbildung zu fördern.

8. Verfahren nach Anspruch 7, wobei für einen Zeitraum im Bereich von 10 bis 240 min, ein Druck im Bereich von 2 mbar bis 4000 mbar in Schritt b) im Reaktionsgefäß vorliegt.

9. Verfahren nach einem der Ansprüche 1-8, wobei in Schritt b) nicht umgesetztes Alkylendiamin vor Schritt c) abdestilliert wird.

10. Verfahren nach einem der Ansprüche 1-9, wobei das Molverhältnis von Alkylendiamin zu Guanidinium-Salz 1,05:1 bis 1:1 beträgt.

11. Poly(alkylen)guanidin, erhältlich mit dem Verfahren nach einem der Ansprüche 1-10, welches einen Gehalt von mindestens 85 Gew.-% eines gewünschten linearen Poly(alkylen)guanidins mit 3-14 Alkylen-Monomereinheiten im Molekül als Hauptprodukt und einen Gehalt an Nebenprodukten, insbesondere verzweigten Isomeren dieses Poly(alkylen)guanidins, von höchstens 15 %, 10 %, 5 % oder 3 % aufweist.

12. Poly(alkylen)guanidin nach Anspruch 11, welches einen Gehalt von mindestens 90 oder 97 Gew.-% eines gewünschten linearen Poly(alkylen)guanidins mit 3-14 Alkylen-Monomereinheiten im Molekül als Hauptprodukt und einen Gehalt an Nebenprodukten, insbesondere verzweigten Isomeren dieses Poly(alkylen)guanidins, von höchstens 15 %, 10 %, 5 % oder 3 % aufweist.

13. Poly(alkylen)guanidin nach Anspruch 12, welches einen Gehalt von mindestens 90 oder 97 Gew.-% eines gewünschten linearen Poly(alkylen)guanidins mit 4-10 Alkylen-Monomereinheiten im Molekül als Hauptprodukt und einen Gehalt an Nebenprodukten, insbesondere verzweigten Isomeren dieses Poly(alkylen)guanidins, von höchstens 10 %, 5 % oder 3 % aufweist.

14. Poly(alkylen)guanidin nach einem der Ansprüche 11 bis 13, welches ein Molekulargewichts-Mittel im Bereich von 500 bis 15.000 aufweist, wobei höchstens 15 %, höchstens 10 %, oder höchstens 3 % der Polymermoleküle ein Molekulargewicht außerhalb des jeweiligen Molekulargewichts-Mittels aufweisen.

15. Poly(alkylen)guanidin nach Anspruch 14, welches ein Molekulargewichts-Mittel im Bereich von 500 bis 5.000 Dalton aufweist.

## Claims

1. A method for the production of poly(alkylene) guanidines, comprising at least the following steps:
a) providing an alkylene diamine of the formula NH₂-(CH₂)ₘ-NH₂ where m = 4-12, in a reaction vessel and heating of the alkylene diamine to a temperature equal to or above the melting temperature of the respective alkylene diamine in a range from 25°C to 115°C, as a result of which a melt of the alkylene diamine is formed;
b) portion-wise adding of a guanidinium salt and reacting with the alkylene diamine until the formation of alkylene(guanidine) monomers is concluded, which may be ascertained by the end of NH₃ release;
c) reacting the monomers formed in step b) at at least the minimum temperature at which the polymerisation to the desired poly(alkylene) guanidine begins, the minimum polymerisation temperature being at least 120°C, until the formation of the poly(alkylene) guanidine is concluded;
wherein the molar ratio of alkylene diamine to guanidinium salt lies in the range from 1.2:1 to 1:1 and steps a) and b) for the formation of alkylene(guanidine) monomers are performed at a temperature below the minimum polymerisation temperature and all of the method steps are carried out while stirring.

2. Method according to Claim 1, wherein step b) is performed at a temperature in the range from 25°C to 110°C for a period of time of 15 min to 20 h and/or wherein step c) is performed for a period of time of 30 min to 25 h.

3. Method according to Claim 1 or 2, comprising at least the following steps:
a) providing an alkylene diamine of the formula NH₂-(CH₂)ₘ-NH₂ where m = 4-12, in a reaction vessel, preferably a pressure reactor, and heating of the alkylene diamine to a temperature equal to or above the melting temperature of the respective alkylene diamine in a range from 25°C to 115°C, as a result of which a melt of the alkylene diamine is formed;
b) portion-wise adding of a guanidinium salt and reacting with the alkylene diamine while stirring at a temperature in the range from 41°C to 110°C for a period of time of 15 min to 25 h until the formation of alkylene(guanidine) monomers is concluded;
c1) heating the monomers formed in step b) while stirring to the minimum temperature at which the polymerisation to the desired poly(alkylene) guanidine begins;
c2) keeping the reaction mixture at this temperature for a predetermined period of time;
c3) slowly increasing the reaction temperature, and after each increment step keeping the reaction mixture at the respective increased temperature for a predetermined period of time;
c4) keeping the reaction mixture at a predetermined maximum temperature for a predetermined period of time;
c5) reducing the temperature of the reaction mixture to a predetermined value below the maximum temperature, but above the minimum temperature for polymerisation and keeping the reaction mixture at this temperature for a predetermined period of time;
c6) cooling the reaction mixture to a temperature below the minimum polymerisation temperature for the termination of polymerisation, as a result of which the desired homogeneous poly(alkyene) guanidine is directly obtained;
wherein steps a) and b) are performed at a temperature below the minimum polymerisation temperature and all method steps a) to c) are performed while stirring.

4. Method according to any one of Claims 1 to 3, wherein the alkylene diamine is tetramethylenediamine, the monomer formation is performed in step b) at a temperature in the range from 25°C to 110°C and the minimum polymerisation temperature is 120°C.

5. Method according to any one of Claims 1 to 3, wherein the alkylene diamine is hexamethylenediamine, octamethylenediamine or decamethylenediamine, the monomer formation is performed in step b) at a temperature in the range from 55°C to 110°C if the alkylene diamine is hexamethylenediamine or octamethylenediamine, or at a temperature in the range from 55°C to 100°C if the alkylene diamine is decamethylenediamine, and the minimum polymerisation temperature is 120 °C.

6. Method according to Claim 5, wherein the monomer formation is performed in step b) at a temperature in the range from 60°C to 80°C if the alkylene diamine is hexamethylenediamine, the monomer formation is performed in step b) at a temperature in the range from 70°C to 90°C if the alkylene diamine is octamethylenediamine, and the monomer formation is performed in step b) at a temperature in the range from 75°C to 90°C if the alkylene diamine is decamethylenediamine.

7. Method according to any one of Claims 1-6, wherein the conclusion of the monomer formation in step b) is ascertained by the cessation of foaming as a result of NH₃ release and optionally a vacuum is generated in the reaction vessel for a predetermined period of time in order to promote foaming.

8. Method according to Claim 7, wherein a pressure is present in the range from 2 mbar to 4000 mbar in step b) in the reaction vessel for a period of time in the range from 10 to 240 min.

9. Method according to any one of Claims 1-8, wherein, in step b), unreacted alkylene diamine is distilled off prior to step c).

10. Method according to any one of Claims 1-9, wherein the molar ratio of alkylene diamine to guanidinium salt lies in the range from 1.05:1 to 1:1.

11. A poly(alkylene) guanidine, obtainable with the method according to any one of Claims 1-10, which has a content of at least 85% by weight of a desired linear poly(alkylene) guanidine with 3-14 alkylene monomer units in the molecule as the main product and a content of by-products, in particular branched isomers of this poly(alkylene) guanidine, of at most 15%, 10%, 5% or 3%.

12. Poly(alkylene) guanidine according to Claim 11, which has a content of at least 90% or 97% of a desired linear poly(alkylene) guanidine with 3-14 alkylene monomer units in the molecule as the main product and a content of by-products, in particular branched isomers of this poly(alkylene) guanidine, of at most 15%, 10%, 5% or 3%.

13. Poly(alkylene) guanidine according to Claim 12, which has a content of at least 90% or 97% of a desired linear poly(alkylene) guanidine with 4-10 alkylene monomer units in the molecule as the main product and a content of by-products, in particular branched isomers of this poly(alkylene) guanidine, of at most 10%, 5% or 3%.

14. Poly(alkylene) guanidine according to any one of Claims 11 to 13, which has a molecular weight average in the range from 500 to 15,000, wherein at most 15%, at most 10%, or at most 3% of the polymer molecules have a molecular weight outside the respective molecular weight average.

15. Poly(alkylene) guanidine according to Claim 14, which has a molecular weight average in the range from 500 to 5000 Dalton.

## Revendications

1. Procédé de fabrication de poly(alkylène)guanidines, comprenant au moins les étapes suivantes :
a) la fourniture d'une alkylènediamine de la formule NH₂-(CH₂)ₘ-NH₂, avec m = 4-12, dans un récipient de réaction et le chauffage de l'alkylènediamine à une température égale ou supérieure à la température de fusion de l'alkylènediamine respective dans une plage de 25 °C à 115 °C, ce qui permet de produire une matière fondue de l'alkylènediamine ;
b) l'ajout par portions d'un sel de guanidinium et la mise en réaction avec l'alkylènediamine jusqu'à ce que l'obtention de monomères d'alkylène(guanidine) soit terminée, ce qui peut être constaté par la fin de la libération de NH₃ ;
c) la mise en réaction des monomères obtenus à l'étape b) à au moins la température minimale, à laquelle la polymérisation commence pour obtenir la poly(alkylène)guanidine, dans lequel la température de polymérisation minimale est d'au moins 120 °C jusqu'à ce que l'obtention de la poly(alkylène)guanidine soit terminée ;
dans lequel le rapport molaire entre l'alkylènediamine et le sel de guanidinium se situe dans la plage de 1,2:1 à 1:1 et les étapes a) et b) sont effectuées pour obtenir des monomères d'alkylène(guanidine) à une température inférieure à la température de polymérisation minimale et toutes les étapes de procédé sont réalisées sous agitation.

2. Procédé selon la revendication 1, dans lequel l'étape b) est réalisée à une température dans la plage de 25 °C à 110 °C pendant une durée de 15 min à 20 h et/ou dans lequel l'étape c) est réalisée pendant une durée de 30 min à 25 h.

3. Procédé selon la revendication 1 ou 2, comprenant au moins les étapes suivantes :
a) la fourniture d'une alkylènediamine de la formule NH₂-(CH₂)ₘ-NH₂, avec m = 4-12, dans un récipient de réaction, de préférence dans un réacteur à pression, et le chauffage de l'alkylènediamine à une température égale ou supérieure à la température de fusion de l'alkylènediamine respective dans une plage de 25 °C à 115 °C, ce qui permet de produire une matière fondue de l'alkylènediamine ;
b) l'ajout par portions d'un sel de guanidinium et la mise en réaction avec l'alkylènediamine sous agitation à une température dans la plage de 41 °C à 110 °C pendant une durée de 15 min à 25 h jusqu'à ce que l'obtention de monomères d'alkylène(guanidine) soit terminée ;
c1) le chauffage des monomères obtenus à l'étape b) sous agitation à la température minimale à laquelle la polymérisation commence pour obtenir la poly(alkylène)guanidine souhaitée ;
c2) le maintien du mélange réactionnel à cette température pendant une durée prédéfinie ;
c3) l'augmentation lente de la température de réaction et, après chaque phase d'augmentation, le maintien du mélange réactionnel à la température augmentée respective pendant une durée prédéfinie ;
c4) le maintien du mélange réactionnel à la température maximale prédéfinie pendant une durée prédéfinie ;
c5) la réduction de la température du mélange réactionnel sur une valeur prédéfinie sous la température maximale toutefois au-dessus de la température minimale pour la polymérisation et le maintien du mélange réactionnel à cette température pendant une durée prédéfinie ;
c6) le refroidissement du mélange réactionnel à une température sous la température de polymérisation minimale pour terminer la polymérisation, ce qui a pour effet que la poly(alkylène)guanidine homogène souhaitée est directement obtenue ;
dans lequel les étapes a) et b) sont effectuées à une température sous la température de polymérisation minimale et toutes les étapes de procédé a) à c) sont réalisées sous agitation.

4. Procédé selon l'une quelconque des revendications 1 à 3, dans lequel l'alkylènediamine est de la tétraméthylènediamine, l'obtention de monomères est effectuée à l'étape b) à une température dans la plage de 25 °C à 110 °C et la température de polymérisation minimale est de 120 °C.

5. Procédé selon l'une quelconque des revendications 1 à 3, dans lequel l'alkylènediamine est de l'hexaméthylènediamine, de l'octaméthylènediamine ou du décaméthylènediamine, l'obtention de monomères est réalisée à l'étape b) à une température dans la plage de 55 °C à 110 °C lorsque l'alkylènediamine est de l'hexaméthylènediamine ou de l'octaméthylènediamine, ou est réalisée à une température dans la plage de 55 °C à 100 °C lorsque l'alkylènediamine est de la décaméthylènediamine et la température de polymérisation minimale est de 120 °C.

6. Procédé selon la revendication 5, dans lequel l'obtention de monomères est réalisée à l'étape b) à une température dans la plage de 60 °C à 80 °C lorsque l'alkylènediamine est de l'hexaméthylènediamine, l'obtention de monomères est réalisée à l'étape b) à une température dans la plage de 70 °C à 90 °C quand l'alkylènediamine est de l'octaméthylènediamine, et l'obtention de monomères est réalisée à l'étape b) à une température dans la plage de 75 °C à 90 °C lorsque l'alkylènediamine est du décaméthylendiamine.

7. Procédé selon l'une quelconque des revendications 1 - 6, dans lequel la fin de l'obtention de monomères est constatée à l'étape b) en finissant la formation de mousse en raison de la libération de NH₃ et éventuellement une dépression est générée dans le récipient de réaction pendant une durée prédéfinie pour favoriser la formation de mousse.

8. Procédé selon la revendication 7, dans lequel une pression dans la plage de 2 mbar à 4000 mbar est présente à l'étape b) dans le récipient de réaction pendant une durée dans la plage de 10 à 240 min.

9. Procédé selon l'une quelconque des revendications 1 - 8, dans lequel de l'alkylènediamine qui n'a pas été mise en réaction à l'étape b) est séparée par distillation avant l'étape c).

10. Procédé selon l'une quelconque des revendications 1 -9, dans lequel le rapport molaire entre l'alkylènediamine et le sel de guanidinium est de 1,05:1 à 1:1.

11. Poly(alkylène)guanidine pouvant être obtenue avec le procédé selon l'une quelconque des revendications 1-10, laquelle présente en tant que produit principal dans la molécule une teneur d'au moins 85 % en poids en une poly(alkylène)guanidine linéaire souhaitée avec 3-14 unités monomères d'alkylène et une teneur en produits secondaires, en particulier en isomères ramifiés de ladite poly(alkylène)guanidine de 15 %, 10 %, 5 % ou 3 % au maximum.

12. Poly(alkylène)guanidine selon la revendication 11, laquelle présente en tant que produit principal dans la molécule une teneur d'au moins 90 ou 97 % en poids en une poly(alkylène)guanidine linéaire souhaitée avec 3-14 unités monomères d'alkylène et une teneur en produits secondaires, en particulier en isomères ramifiés de ladite poly(alkylène)guanidine de 15 %, 10 %, 5 % ou de 3 % au maximum.

13. Poly(alkylène)guanidine selon la revendication 12, laquelle présente en tant que produit principal dans la molécule une teneur d'au moins 90 ou 97 % en poids en une poly(alkylène)guanidine linéaire souhaitée avec 4-10 unités monomères d'alkylène et une teneur en produits secondaires, en particulier en isomères ramifiés de ladite poly(alkylène)guanidine de 10 %, 5 % ou 3 % au maximum.

14. Poly(alkylène)guanidine selon l'une quelconque des revendications 11 à 13, laquelle présente une moyenne de poids moléculaire dans la plage de 500 à 15 000, dans laquelle 15 % au maximum, 10 % au maximum, 3 % au maximum des molécules de polymère présentent un poids moléculaire en dehors de la moyenne de poids moléculaire respective.

15. Poly(alkylène)guanidine selon la revendication 14, laquelle présente une moyenne de poids moléculaire dans la plage de 500 à 5 000 Dalton.
